Europäisches Patentamt

European Patent Office

Office européen des brevets

(19)

(11) Veröffentlichungsnummer: **0 028 664**
**B1**

(12) # EUROPÄISCHE PATENTSCHRIFT

(45) Veröffentlichungstag der Patentschrift:
**25.04.84**

(51) Int. Cl.³: **B 05 B 1/32**, B 01 D 19/00

(21) Anmeldenummer: **79200733.8**

(22) Anmeldetag: **06.12.79**

(54) **Flüssigkeitsverteilkopf.**

(30) Priorität: **08.11.79 CH 9999/79**

(43) Veröffentlichungstag der Anmeldung:
**20.05.81 Patentblatt 81/20**

(45) Bekanntmachung des Hinweises auf die Patenterteilung:
**25.04.84 Patentblatt 84/17**

(84) Benannte Vertragsstaaten:
**AT CH DE NL SE**

(56) Entgegenhaltungen:
**FR - A - 562 215**
**US - A - 2 207 758**
**US - A - 2 671 524**
**US - A - 2 689 018**

(73) Patentinhaber: **BBC Aktiengesellschaft Brown, Boveri & Cie., Haselstrasse, CH-5401 Baden (CH)**

(72) Erfinder: **Brand, Andreas, Lindenhof 25, CH-5430 Wettingen AG (CH)**
Erfinder: **Datz, Rudolf, Flüestrasse 12, CH-5313 Klingnau AG (CH)**

Flüssigkeitsverteilkopf

Die Erfindung betrifft einen Flüssigkeitsverteilkopf für einen Mischvorwärmer-Entgaser in Dampfkraftanlagen gemäß dem Oberbegriff des Patentanspruches 1.

Bei einer derartigen bekannten Anlage gemäß der US-A-2 671 524 wird eine Wasserzerstäubungsdüse verwendet, welche aus einem federbelasteten Ventil besteht, die in einer Wassereintrittskammer am Oberteil eines Mischvorwärmers so angeordnet ist, daß das Ventil mit Ventilteller, Ventilfeder und Federteller von einem Umlenkgehäuse umgeben ist. Dabei werden die beweglichen Teile des Ventiles, insbesondere die Ventilfeder, der Ventilteller und der Ventilschaft vom Wasser umspült.

Bei dieser Anordnung besteht ein Nachteil darin, daß die dem Wasserstrom ausgesetzten Teile stark erosionsgefährdet sind. Daneben gestalten sich für die Montage bzw. bei Revisionen bei dieser Ausbildung die Arbeiten sehr zeitaufwendig.

Der im kennzeichnenden Teil des Patentanspruches 1 definierten Lösung liegt die Aufgabe zugrunde, einen Flüssigkeitsverteilkopf zu schaffen, bei welchem möglichst wenig bewegliche Teile des Ventils dem Flüssigkeitsstrom ausgesetzt und damit vor Erosion geschützt sind.

Neben der erosionsgeschützten Anordnung der Ventilfeder und des Federtellers ergibt sich bei der erfindungsgemäßen Ventil-Ausbildung der Vorteil, daß bei einem eventuell auftretenden Federbruch die Bruchstücke zwischen dem Schutzgehäuse und dem Federteller zurückgehalten werden und nicht in den Mischvorwärmer fallen können.

Weitere Vorteile des Erfindungsgegenstandes ergeben sich aus den abhängigen Ansprüchen 2 und 3.

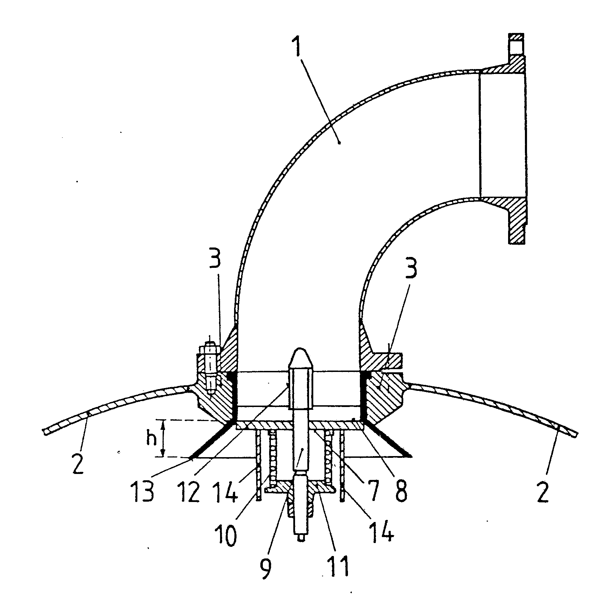

In der Zeichnung ist ein Ausführungsbeispiel des Erfindungsgegenstandes vereinfacht dargestellt, wobei mit 1 ein Flüssigkeitszuführungskrümmer bezeichnet ist, der am Oberteil eines Mischvorwärmergehäuses 2 mittels eines Flansches 3 befestigt ist. Der Flüssigkeitszuführungskrümmer 1 mündet in ein als Sprüheinsatz ausgebildetes Ventil 7, welches aus einem Ventilteller 8, einem Ventilschaft 9, einer Ventilfeder 10 und einem Federteller 11 besteht. Das Ventil 7 ist mittels einer Halterung 12 im Flansch 3, zusammen mit einem kegelstumpfförmig ausgebildeten Umlenkschirm 13 so angeordnet, daß dessen Innenoberfläche das durch das Ventil 7 eingesprühte Wasser auf den zylindrischen Teil der Innenoberfläche des Mischvorwärmers verteilt. Die Ventilfeder 10 ist von einem ringförmigen Schutzgehäuse 14 umgeben, welches am Ventilteller 8 anliegt. Damit wird sichergestellt, daß bei einem evtl. auftretenden Federbruch keine Bruchstücke in den Mischvorwärmer fallen. Das Schutzgehäuse 14 kann auch aus zwei Gehäusehälften bestehen, die sich bei Federbewegungen konzentrisch ineinander schieben.

Durch die Abstimmung der Öffnung des Ventiltellers 8 und des konstanten Winkels des Umlenkschirmes 13 erfolgt unabhängig vom Wasserdurchsatz die Auflösung des Wassers in genügend feine Tropfen. Der zur Versprühung des Wassers erforderliche Druck ist relativ gering. Dementsprechend wird auch die Spannung der Ventilfeder 10 über den Federteller 11 eingestellt. Auch der Druckverlust des eingespritzten Wassers hält sich in bescheidenen Grenzen; der Druckabfall bewegt sich in der Größenordnung zwischen 3 und 5 mWS über den gesamten Bereich.

Durch die erfindungsgemäße Ventilausbildung wird eine Verstopfung des Sprüheinsatzes weitgehendst vermieden. Ein derartiger Sprüheinsatz kann auch für alle anderen Flüssigkeiten in anderen Anwendungsbereichen, beispielsweise in der Soleverdampfung, Verwendung finden, da nur wenige Teile aus korrosions- und erosionsbeständigem Material bestehen müssen.

**Patentansprüche**

1. Flüssigkeitsverteilkopf für einen Mischvorwärmer-Entgaser in Dampfkraftanlagen, wobei im Gehäuseoberteil (2) ein Flüssigkeitszuführungskrümmer (1) vorgesehen ist, an dessen Mündung ein aus einem federbelasteten Ventil (7) mit Ventilteller (8), Ventilfeder (10) und Federteller (11) sowie ein mit einem kegelstumpfförmig ausgebildeten Umlenkschirm (13) bestehender Sprüheinsatz im Inneren des Mischvorwärmers (2) und zentral im Umlenkschirm (13) angeordnet ist, dadurch gekennzeichnet, daß die Ventilfeder (10) und der Federteller (11) des Ventils (7) auf der dem Flüssigkeitszuführungskrümmer (1) abgewandten Seite des Ventiltellers (8) angeordnet und von einem ringförmigen Schutzgehäuse (14) umgeben sind, das am Ventilteller (8) anliegt.

2. Flüssigkeitsverteilkopf nach Anspruch 1, dadurch gekennzeichnet, daß der Umlenkschirm (13) eine etwa doppelt so große Kragenhöhe (h) aufweist, als der maximale Spalt bei geöffnetem Ventil (7) beträgt.

3. Flüssigkeitsverteilkopf nach Anspruch 1, dadurch gekennzeichnet, daß das Ventil (7) mit dem Umlenkschirm (13) an einem Flansch (3) des Mischvorwärmers (2) befestigt ist.

**Claims**

1. Liquid distributor head for a mixing preheater deaerator in steam power stations, a liquid feed elbow (1) being provided in the upper casing part (2), in the end of which elbow a spray insert consisting of a spring-loaded valve (7) with valve disc, valve spring (10) and spring disc (11) and of a deflection screen (13) formed in the shape of a truncated cone is arranged in the interior of the mixing preheater (2) and centrally in the deflection screen (13), characterised in that the valve spring (10) and the spring disc (11) of the valve (7) are arranged on that side of the valve disc (8) which faces away from the liquid feed elbow (1) and are surrounded by an annular protective housing (14) which bears against the valve disc (8).

2. Liquid distributor head according to Claim 1, characterised in that the deflection screen (13) has a collar height (h) which is approximately twice the size of the maximum gap with the valve (7) opened.

3. Liquid distributor head according to Claim 1, characterised in that the valve (7) is fixed by the deflection screen (13) to a flange (3) of the mixing preheater (2).

## Revendications

1. Tête de distribution de liquide pour un préchauffeur de mélange/dégazeur dans des installations de force motrice à vapeur, la partie supérieure (2) du logement comportant un coude d'alimentation de liquide (1) à l'embouchure duquel est disposé, à l'intérieur du préchauffeur de mélange (2) et au centre d'un écran de déviation (13), une pièce rapportée de pulvérisation constituée d'une soupape (7) sollicitée par un ressort et comportant une tête (8), un ressort (10) et une cuvette de ressort (11), ainsi que de cet écran de déviation (13) réalisé sous forme d'un tronc de cône, caractérisée en ce que le ressort (10) et la cuvette de ressort (11) de la soupape (7) sont disposés sur le côté de la tête de soupape (8) qui est éloigné du coude d'alimentation de liquide (1), tandis qu'ils sont entourés d'un logement protecteur annulaire (14) qui vient s'appliquer à la tête de soupape (8).

2. Tête de distribution de liquide suivant la revendication 1, caractérisée en ce que l'écran de déviation (13) a une hauteur de col (h) à peu près deux fois aussi grande que l'espace maximum existant lorsque la soupape (7) est ouverte.

3. Tête de distribution de liquide suivant la revendication 1, caractérisée en ce que la soupape (7) est fixée, avec l'écran de déviation (13) à une bride (3) du préchauffeur de mélange (2).